# EUROPEAN PATENT SPECIFICATION

(11) **EP 0 448 547 B1**
(45) Date of publication and mention of the grant of the patent: **08.12.1993**
(21) Application number: 91890055.6
(22) Date of filing: 21.03.1991
(51) Int. Cl.: B60H 1/24

(54) **Car ventilating device**
Fahrzeug Belüftungsvorrichtung
Dispositif de ventilation pour véhicules

(30) Priority: 22.03.1990 JP 29517/90; 20.06.1990 JP 65189/90
(43) Date of publication of application: 25.09.1991
(73) Proprietor: Ohba, Shunji, Shimada-shi, Shizuoka (JP)
(72) Inventor: Ohba, Shunji, Shimada-shi, Shizuoka (JP)
(74) Representative: Barger, Werner, Dipl.-Ing.

(56) References cited:
- GB-A- 2 220 738
- US-A- 2 161 728
- US-A- 4 804 140
- PATENT ABSTRACTS OF JAPAN, vol. 10, no. 151 (M-483)[2208], 31st May 1986;& JP-A-61 6017 (RITSUKO OKADA) 11-01-1986
- PATENT ABSTRACTS OF JAPAN, vol. 6, no. 97 (M-134)[975], 5th June 1985;& JP-A-57 33 012 (DIESEL KIKI K.K.) 23-02-1982

## Description

### BACKGROUND OF THE INVENTION

This invention related to an automatic ventilating device for for a cabin of a vehicle such as a passenger car or a truck, more particularly, to a ventilating device which prevents temperature in a cabin of a vehicle from going too high during the vehicle's parking time.

Sometimes temperature in a cabin of a vehicle raises, during its parking time with the engine stopped, to an extremely high degree which we can never experience in our daily life. For instance, if a vehicle is left under the burning sun in the summer, temperature in a cabin of the vehicle goes up to 60 to 70 degrees centigrade.

When an engine is running, it is possible to prevent temperature in a cabin of a vehicle from going up too high with an air conditioner, but a fuel consumption rate of an air conditioner is generally very high, and leaving a vehicle with the engine running when nobody is in it may cause problems concerning safety. Also parking with windows open is risky because of the possibility of theft and not practical.

Recently, some people use a fan which is mounted on a portion of a car window and can be run during parking time to ventilate air in a cabin of the car to prevent temperature in the cabin from going up too high. As this device can easily be broken, however, it is inadequate for prevention of theft, and also as battery consumption due to rotation of the fan is large, the device has not spread so much. A device according to the preamble of claim 1 is known, for example, from US-A-4.804.140.

A principle object of the present invention is to provide a cabin ventilating device which is driven by solar energy and ventilates air in a cabin of a vehicle in parking without consuming fuel and battery, and which is hardly broken and free from the possibility of theft.

### SUMMARY OF THE INVENTION

A ventilating device according to the present invention has an exhaust path penetrating through a portion of a vehicles body to exhaust air in the cabin of a vehicle to outside, a fresh-air conducting path penetrating through a portion of the vehicle's body to conduct fresh air into the cabin of the vehicle, a valve arranged in said exhaust path, an air-flow activating means arranged in series to this valve, a valve arranged in said fresh-air conducting path, an air-flow activating means arranged in series to this valve, solar cells which are arranged on an external surface of the vehicle to receive sunlight and generate electricity, and an electric circuit which drives each of said air-flow activating means by making use of electricity from said solar cells.

As the air-flow activating means arranges in the exhaust path and in the fresh-air conducting path are driven by the energy generated by the solar cells and do not consume fuel or battery energy, this ventilating device is quite energy saving. On fine days when temperature in a cabin of a vehicle goes high, the solar cells can generate and supply as much electricity as required by the air-flow activating means. On rainy days or at night when ventilation is not necessary, electric energy generated by the solar cells is little, and the ventilating device does not work.

The exhaust path and the fresh-air conducting path penetrate through a portion of the vehicle's body, and there are valves arranged near and to the exterior side from the air-flow activating means, so that the driver does not have to worry about destruction or theft during parking time. The valves are kept closed when the air-flow activating means does not work, and this feature prevents cool air from coming into the cabin when running, especially in the winter, and a warming effect in the cabin does not go down.

The inlet of the exhaust path should be arranged on a ceiling of the cabin, while the inlet of the fresh-air conducting path should be arranged on an external face of the vehicles body. With this arrangement, air with high temperature, which gathers near the ceiling of the cabin, is easily ventilated by fresh air with low temperature conducted to the cabin from a shade under the vehicle's body, which insures efficiency in lowering temperature in the cabin.

A bulkhead is arranged in the aforesaid exhaust path and the aforesaid fresh-air conducting path respectively to the exterior side from the aforesaid valves. This bulkhead can prevent rain water and the like from coming into the cabin from the exhaust path and the fresh-air conducting path when driving on a rainy day.

In the electric circuit coupling said solar cells to each of said air-flow activating means, a power switch, a switch correlating to and engine key switch, and a thermostat which works according to temperature in the cabin are arranged in series. With this arrangement, the air-flow activating means automatically works only when the engine does not run and temperature in the cabin is high, and the solar cells may be of compact size with small capacity.

### BRIEF DESCRIPTION OF THE DRAWING

Fig.1 is a perspective view showing a portion of a car to which the present invention is applied.

Fig.2 is a sectional view of a vehicles body along a center line of the exhaust path.

Fig.3 is a circuit diagram with a rear view of a valve in the exhaust path in a close position.

Fig.4 is a sectional view of the exhaust path at the valve.

Fig.5 is a circuit diagram with a rear view of the same valve in an open position.

Fig.6 is a size view of a valve in an exhaust path of another embodiment of the present invention.

Fig.7 is a plan of the same valve.

### DESCRIPTION OF PREFERRED EMBODIMENT

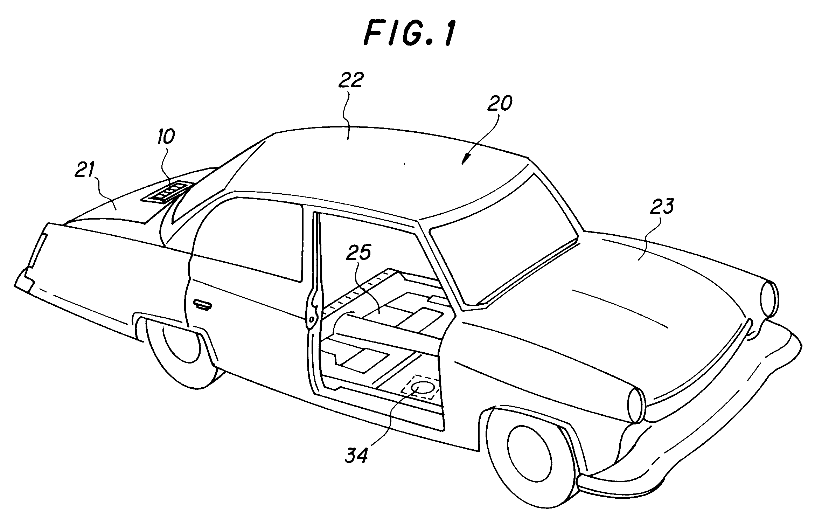

In Fig.1, a solar cell 10 having a light collecting board which receives sunlight is mounted on a top face of a rear section (trunk) of a vehicles body 20. Note that the solar cell 10 may be mounted on the ceiling 22 of the vehicle's body 20 or on a surface of a bonnet 23, or on other section exposed to sunlight.

Although not shown in Fig.1, a convertor which converts a direct current generated by the solar cell 10 to an alternating current and a battery which stores electric energy generated by the solar cell 10 are incorporated.

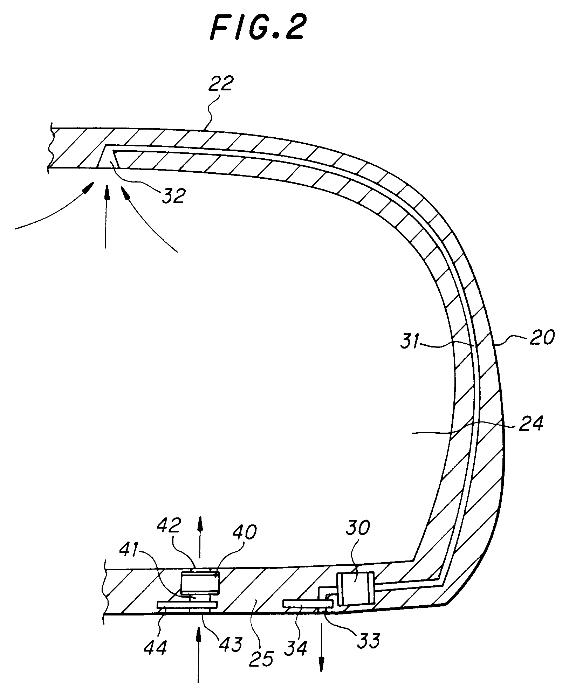

As shown also in Fig.2, an exhaust path 31 which exhausts air in a cabin 24 through a piping running through the vehicle's body 20 to outside and a fresh-air conducting path 41 which conducts fresh air from outside into the cabin 24 are arranged. The exhaust path 31 takes out air from an inlet port 32 on the ceiling 22 of the cabin 24 and exhaust the air from an outlet port 33 on an external face of a floor panel 23. The fresh-air conducting path 41 sends fresh air took from an inlet port 43 on an external face of the floor panel 25 into the cabin 24 from an outlet port 42 on an internal face of the floor panel 25.

An air-flow activating unit 30 which works using said solar cell 10 as a power source is arranged on said exhaust path 31. This air-flow activating unit 30 comprises, for instance, an electrically operated fan, and discharges air in the cabin to outside.

A valve 34, which opens and closes the exhaust path 31, is arranged to the exterior side from the air-flow activating unit 30. The valve 34 opens when the air-flow activating unit 30 works in accordance with input of electric power from the solar cells.

Similarly, an air-flow activating unit 40 comprising an electrically operated fan to take air from outside into the cabin is arranged on the fresh-air conducting path 41, and a valve 44 to open or close the fresh-air conducting path 41 is arranged to the exterior side from said air-flow activating unit 40.

For this reason, air which is warmed during parking time and gathers near the ceiling is forcibly discharged to outside by the air-flow activating unit 30 via the exhaust path 31 with its opening on the ceiling, while cool air with relatively low temperature in the shadow under the vehicle's body 20 is introduced into the cabin by the air-flow activating unit 40 via the fresh-air conducting path 41 with its opening on the external face of the floor panel 25.

Configuration and operation of the air-flow activating unit 40 and the valve 44 are basically the same as those of the air-flow activating unit 30 and the valve 34 on the exhaust path 31, which are described in detail later, and can easily be understood by referring to the description thereof.

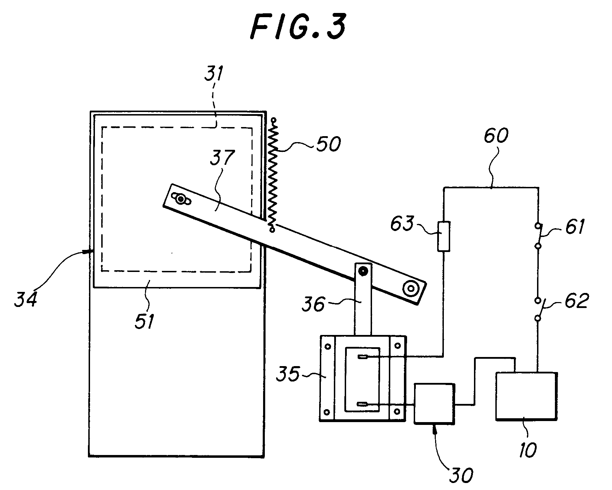

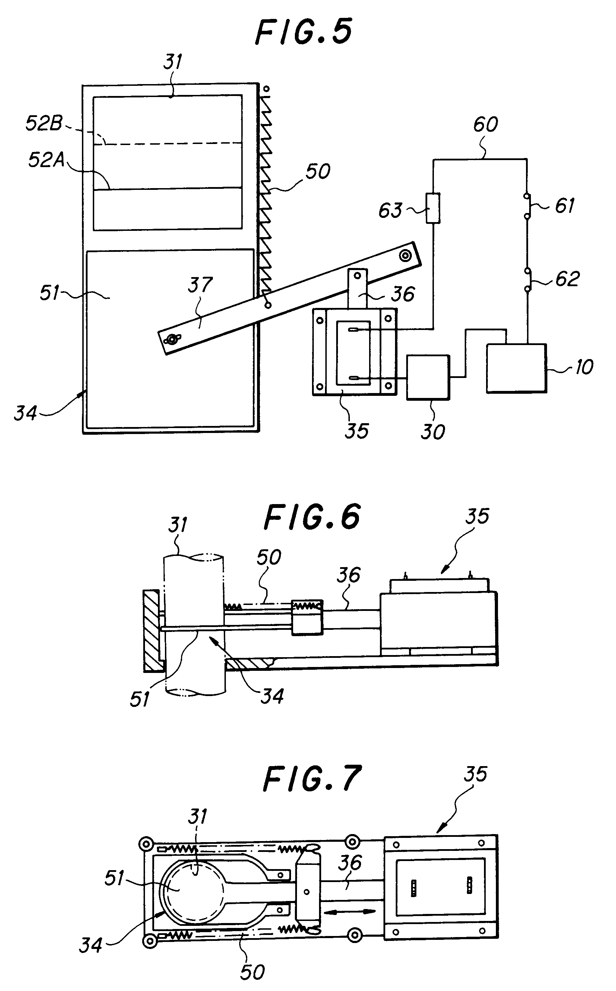

As shown in Fig.3 and Fig.5, the valve 31 arranged on the exhaust path 31 is driven by a solenoid actuator 35. Namely, a valve body 31 is coupled to a link 37 driven by a plunger 36 of the solenoid actuator 35, and when the solenoid actuator 35 is activated, the link 37 makes the valve body 51 slide against a return spring 50, and opens the exhaust path 31 (Refer to Fig.5) .

When the solenoid actuator 35 is not activated, the valve body 51 is kept closed due to effect of the return spring 50 (Refer to Fig.3).

An electric circuit 60, which drives the air-flow activating unit 30 and the valve 34 with the solar cell 10 has a series combination of a first switch 61 as a power switch, a second switch 62 which works in correlation to an engine key switch of the vehicle not shown in the drawings, and a thermostat 63 which works according to change of temperature in the cabin.

Said second switch 62 correlates to the engine key switch so that it turns ON when the engine switch is turned OFF and it turns OFF when the engine switch is turned ON.

A temperature valve, at which the thermostat 63 starts working by closing its contact, can be set freely. For instance, the contact will be closed when the temperature in the cabin rises above 30 degrees centigrade.

With this feature, when the vehicle stops and the engine key switch is turned OFF, the second switch 62 correlating to said engine key turns ON, and if the first switch 61 as a power switch is kept ON, the valve 34 and 44 will automatically open and simultaneously the air-flow activating units 30 and 40 start working when the thermostat 63 starts working by closing its contact in accordance with temperature increase in the cabin.

With this operation, air with high temperature in the cabin is exhausted from the exhaust path 31 to the outside, and also fresh air with low temperature under the vehicle's body comes into the cabin through the fresh-air conducting path 41, thus the cabin automatically and temperature in the cabin prevented from abnormally rising.

In contrast, when temperature in the cabin does not rise above a value set in the thermostat 63, the air-flow activating units 30 and 40 do not work. As they work only when temperature in the cabin rises and ventilation is required, a capacity of the solar cell 10 can be minimized, which also means the possibility of minimizing its size.Note that, on rainy or cloudy days or at night when electric energy generation rate of the solar cell 10 is low, the air-flow activating units 30 and 40 do not work, which is preferable in view of the durability of the air-flow activating units 30 and 40.

When the power switch 61 is OFF or engine is running, the valves 34 and 44 close the exhaust path 31 and the fresh-air conducting path 41 respectively, so that, when driving, especially in the winter, fresh air with low temperature is prevented from coming into the cabin and also loss of warming efficiency does not occur.

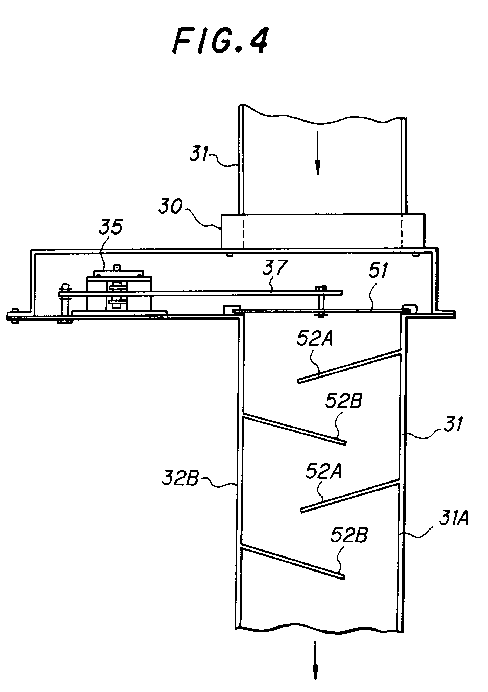

As shown in Fig. 4, bulkheads 52A and 52B are arranged at a specified interval alternately to the exterior side from the valve 34 in the exhaust path 31 to prevent water such as rainwater from coming into the inside.

The bulkheads 52A are fixed on a a wall 31A of the exhaust path 31 at a certain interval, and the bulkheads 52B are fixed at a certain interval on the wall 31B of the exhaust path 31 which is facing the wall 31A.

Combination of these bulkheads 52A and 52B forms a path bending zigzag to prevent water such as rainwater from coming into the cabin when driving on a rainy day or when cleaning the car.

These bulkheads 52A and 52B are also arranged to the exterior side from the valve 44 in the fresh-air conducting path 41.

Fig.6 and Fig.7 snow another embodiment of the valve 34(44). In this embodiment, the valve body 51 is directly connected to the plunger 36 of the solenoid actuator 35. Note that the plunger 36 is biased by the return spring 50 to the close position of the valve 34.

This invention can be implemented in various forms without deviating from the scope of the appended claims. The embodiment described in this specification shows an application for a passenger car, but it can also be applied in other types of vehicle such as trucks. The preferable embodiment shown in this specification is illustrative and not restrictive.

## Claims

1. A car ventilating device which ventilates air in a cabin (24) of a vehicle and lowers temperature in the cabin, having an exhaust path (31) penetrating through a portion of the vehicle to exhaust air in a cabin (24) of the vehicle to outside, a fresh-air conducting path (41) penetrating through a portion of said vehicle to conduct fresh air into the cabin, a valve (34) being arranged in said exhaust path (31), a air-flow activating means (30) being arranged in said exhaust path (31) in series to said valve (34), a valve (44) being arranged in said fresh-air conducting path (41), an air-flow activating means (40) being arranged in said fresh-air conducting path (41) in series to said valve (44), a solar cell (10) being installed on a external surface (22,23) of said vehicle to receive sunlight for generating electricity and an electric circuit (60) which drives said each air-flow activating means (30,40), said each air-flow activating means (30,40) being an electrically operated fan, and said each valve (34,44) with the electricity generated by said solar cell (10), characterized in that
said exhaust path (31) has an inlet port (32) on a ceiling (22) of the cabin (24), an outlet port (33) on the external face of a floor (23) of the vehicle's body (20), and a piping running through the vehicle's body to connect the inlet and the outlet port of said exhaust path,
said fresh-air conducting path (41) having an inlet port (43) on the external face of the floor (23) of the vehicle's body (20),
said each valve (34,44) being arranged to the exterior side from the elecrically operated fan (30,40), and having valve body driven to a opening position by a solenoid (35) and returned to a closing position by a spring (50),
a plurality of bulkheads (52A,52B) being installed alternately in said exhaust path (31), and arranged to the exterior side from said valve (34) to prevent rain water from coming into the cabin (24) from outside,
a plurality of bulkhead (52A,52B) being installed alternately in said fresh-air conducting path (41), and arranged to the exterior side from said valve (44) to prevent rain water from coming into the cabin (24) from outside,
said electrical circuit (60) having a series combination of a power switch (61), a thermostat (63) which reacts according to temperatur in the cabin (24), and a switch (62) which automatically turns off when an engine key of the vehicle is turned on.

## Patentansprüche

1. Eine Fahrzeugbelüftungsvorrichtung, die einer Kabine (24) eines Fahrzeuges Luft zuführt und die Temperatur in der Kabine senkt, mit einer Auslaßluftleitung (31), die durch einen Teil des Fahrzeuges führt, um Luft von einer Kabine (24) des Fahrzeuges nach außen zu bringen, einer Frischluftzufuhrleitung (41), die durch einen Teil des Fahrzeuges führt, um der Kabine Frischluft zuzuführen, einem Ventil (34), das in der Auslaßleitung (31) vorgesehen ist, mit einem Luftbewegungsmittel (30), das in der Auslaßllufteitung (31) vorgesehen und zum Ventil (34) in Serie geschalten ist, mit einem Ventil (44), das in der Frischluftzufuhrleitung (41) ist, einem Luftbewegungsmittel (40) das in der Frischluftzuleitung (41) vorgesehen und zum Ventil (44) in Serie geschalten ist, mit einer Solarzelle, die an einer äußeren Oberfläche (22, 23) des Fahrzeuges angeordnet ist, um Sonnenlicht zu empfangen, um elektrischen Strom zu erzeugen und mit einem elektrischen Kreis (60), der jedes der Luftbewegungsmittel (30, 40), wobei jedes der Luftbewegungsmittel (30, 40) ein elektrisch betätigter Ventilator ist, und der Ventile (34, 44), mit Elektrizität versorgt, die durch die Solarzelle (10) erzeugt wird, dadurch gekennzeichnet,
daß die Auslaßluftleitung (31) eine Einlaßöffnung (32) an einer Oberseite (22) der Kabine (24) aufweist, eine Auslaßöffnung (33) an der Außenseite eines Bodenteiles (23) des Fahrzeugkörpers (20) aufweist, und eine Leitung, die durch den Fahrzeugkörper verläuft, um die Einlaß- mit der Auslaßöffnung der Auslaßluftleitung zu verbinden,
daß die Frischluftzufuhrleitung (41) eine Einlaßöffnung (43) auf der Außenseite des Bodens (23) des Fahrzeugkörpers (20) aufweist,
daß jedes Ventil (34, 44) außerhalb des elektrisch betätigten Ventilators (30, 40) vorgesehen ist und einen Ventilkörper aufweist, der durch eine Spule (35) in die geöffnete Lage und durch eine Feder (50) in die geschlossene Lage gebracht wird,
daß eine Mehrzahl von Abweisern (52A, 52B), in abwechselnder Richtung angeordnet, in der Auslaßluftleitung (31) im Teil außerhalb des Ventiles (34) angeordnet sind, um das Eindringen von Regenwasser vom Äußeren in die Kabine (24) zu verhindern,
daß eine Mehrzahl von Abweisern (52A, 52B) in abwechselnder Richtung angeordnet, in der Frischluftleitung (41) im Teil außerhalb des Ventiles (44) angeordnet sind, um das Eindringen von Regenwasser vom Äußeren in die Kabine (24) zu verhindern, und
daß der elektrische Kreis (60) eine Serienschaltung eines Ein-/Ausschalters (61), eines Thermostates, der in Abhängigkeit von der Temperatur in der Kabine (24) reagiert und eines Schalters (62), der automatisch ausschaltet, wenn ein Startschlüssel des Fahrzeuges gedreht wird, aufweist.

## Revendications

1. Appareil de ventilation de voiture automobile, assurant la ventilation de l'air d'une cabine (24) d'un véhicule et réduisant la température dans la cabine, ayant un trajet d'échappement (31) qui pénètre dans une partie du véhicule afin qu'il évacue l'air de la cabine (24) du véhicule vers l'extérieur, un conduit (41) destiné à conduire de l'air frais qui pénètre dans une partie du véhicule et qui est destiné à conduire de l'air frais dans la cabine, un obturateur (34) placé dans le trajet d'échap- pement (31), un dispositif (30) d'activation de circulation d'air placé dans le trajet d'échappement (31) en série avec l'obturateur (34), un obturateur (44) placé dans le conduit (41) destiné à conduire de l'air frais, un dispositif (40) d'activation de circulation d'air placé dans le trajet (41) destiné à conduire de l'air frais en série avec l'obtura- teur (44), une pile solaire (10) installée sur une surface externe (22, 23) du véhicule afin qu'elle reçoive la lumière du soleil et crée de l'électricité, et un circuit électrique (60) qui pilote les dispositifs (30, 40) d'activation de circulation d'air, ces dispositifs (30, 40) d'activation de circulation d'air étant constitués d'un ventilateur électrique, et chaque obturateur (34, 44) à l'aide de l'électricité créée par la pile solaire (10), caractérisé en ce que
le trajet d'échappement (31) a un orifice d'entrée (32) au plafond (22) de la cabine (24), un orifice de sortie (33) à la face externe du plancher (23) d'une carrosserie (20) de véhicule, et un tube placé dans la carrosserie du véhicule et destiné à raccorder l'entrée à l'orifice de sortie du trajet d'échappement,
le trajet (41) destiné à conduire l'air frais ayant un orifice d'entrée (43) à la face externe du plancher (23) de la carrosserie (20) du véhicule,
chaque obturateur (34, 44) étant placé du côté externe du ventilateur électrique (30, 40) et ayant un corps d'obturateur entraîné en position d'ouverture par un électro-aimant (35) et rappelé en position de fermeture par un ressort (50),
plusieurs cloisons (52A, 52B) étant montées en alternance dans le trajet d'échappement (31) et étant disposées vers le côté externe par rapport à l'obturateur (34) afin que l'eau de pluie ne puisse pas pénétrer dans la cabine (24) depuis l'extérieur,
plusieurs cloisons (52A, 52B) étant placées en alternance dans le trajet (41) destiné à conduire l'air frais et étant disposées du côté externe par rapport à l'obturateur (44) afin que l'eau de pluie ne puisse pas pénétrer dans la cabine (24) depuis l'extérieur,
le circuit électrique (60) ayant une combinaison en série d'un interrupteur d'alimentation (61), d'un thermostat (63) qui réagit à la température dans la cabine (24), et d'un interrupteur (62) qui s'ouvre automatiquement lorsqu'une clé de contact du moteur du véhicule est mis en position de fonctionnement.
